# FASCICULE DE BREVET EUROPEEN

(11) **EP 3 464 043 B1**
(45) Date de publication et mention de la délivrance du brevet: **25.03.2020**
(21) Numéro de dépôt: 17737484.0
(22) Date de dépôt: 02.06.2017
(51) Int. Cl.: B62K 21/12

(54) **PROCÉDÉ DE NAVIGATION À VÉLO ET GUIDON DE VÉLO**
FAHRRADNAVIGATIONSVERFAHREN UND FAHRRADLENKER
BICYCLE NAVIGATION METHOD AND BICYCLE HANDLEBAR

(30) Priorité: 03.06.2016 FR 1655071
(43) Date de publication de la demande: 10.04.2019
(73) Titulaire: VEL'CO, 44300 Nantes (FR)
(72) Inventeur: REGNIER, Pierre, 44470 Thouaré-sur-Loire (FR); SAVOURÉ, Romain, 35640 Martigné-Ferchaud (FR); SMITH, Johnny, 92100 Boulogne-Billancourt (FR)
(74) Mandataire: Gicquel, Frédéric
(86) Numéro de dépôt international: PCT/EP2017/063520
(87) Numéro de publication internationale: WO 2017/207782

(56) Documents cités:
- WO-A1-2016/079620
- KR-A- 20160 046 791
- WAGNER SALVES: "Hammerhead Navigation 1.0 gps bike", , 6 novembre 2013 (2013-11-06), pages 1-3, XP054977083, Extrait de l'Internet: URL:https://www.youtube.com/watch?v=bGH9J3 c8_Tw [extrait le 2017-01-19]

## Description

La présente invention concerne de manière générale un guidon de vélo équipé de sources lumineuses et un procédé de guidage d'un cycliste au moyen d'un tel guidon de vélo.

Il est connu dans l'art antérieur des vélos équipés de moyens de guidage tels que celui décrit dans le document WO2014205345 (A2). En contrepartie, ce système présente notamment l'inconvénient de ne pas offrir de guidage efficace et intuitif au cycliste.
On connaît aussi des accessoires amovibles de guidage, tels que celui divulgué sur l'adresse https://www.youtube.com/watch?v=bGH9J3c8 Tw, appelé Hammerhead, qui montre le préambule de la revendication 1, ou un téléphone portable fixé sur une potence de vélo, comme décrit dans le document KR20160046791 A. Cependant, ces accessoires peuvent tomber si la route empruntée est inégale, et ils ne fournissent pas non plus de guidage intuitif.

Un but de la présente invention est de répondre aux inconvénients des documents de l'art antérieur mentionnés ci-dessus et en particulier, tout d'abord, de proposer un guidon de vélo qui permet notamment un procédé de guidage d'un cycliste efficace et intuitif.

Pour cela un premier aspect de l'invention concerne un procédé de guidage d'un cycliste pilotant un vélo équipé d'un guidon de vélo, comprenant les étapes consistant à :
- illuminer distinctement de chaque côté d'une zone de fixation centrale du guidon de vélo sur une potence de vélo une zone lumineuse proximale située du côté de la zone de fixation centrale ou une zone lumineuse distale, en fonction de la route à suivre. Le procédé selon l'invention propose de gérer distinctement (séparément, donc) les zones lumineuses proximales et distales de chaque côté de la potence, pour guider le cycliste. En conséquence, il est possible de prévoir des combinaisons d'illumination entre les zones lumineuses pour guider efficacement le cycliste. Bien entendu, l'invention n'est pas limitée au pilotage de deux fois deux zones proximale et distale.

D'après l'invention, les zones lumineuses sont intégrées au guidon, c'est-à-dire qu'elles ne sont pas amovibles. Autrement dit, elles sont fixées à demeure sur le tube du guidon. Cela permet de garantir que les zones lumineuses ne se décrochent pas du guidon ; même si la route parcourue est inégale et génère des secousses.

En particulier, si de chaque côté de la zone de fixation centrale on regroupe la zone lumineuse distale et la zone lumineuse proximale pour former une seule surface lumineuse par côté, alors cette surface lumineuse présente une extrémité proximale (du côté du centre, la zone lumineuse proximale) et une extrémité distale (du côté extérieur du guidon, la zone lumineuse distale) et le procédé proposer d'illuminer distinctement les extrémités de chaque surface lumineuse, en combinaison par exemple avec une extrémité de l'autre surface lumineuse pour augmenter les possibilités de transmettre des informations au cycliste. En d'autres termes, les deux surfaces lumineuses agencées de part et d'autre de la potence du guidon comprennent chacune une extrémité du côté de la potence (l'extrémité proximale) et une extrémité du côté extérieur du guidon (l'extrémité distale).

Avantageusement, au moins chacune des zones lumineuses proximales et/ou chacune des zones lumineuses distales est illuminée lorsque le cycliste doit aller tout droit à une intersection. La conjonction d'illumination des deux zones lumineuses centrales permet d'indiquer au cycliste qu'il doit aller tout droit. En d'autres termes, il y a un équilibre lumineux de chaque côté de la potence du vélo, si bien que le cycliste comprend qu'il faut aller tout droit. Le procédé prévoit d'illuminer les mêmes zones lumineuses de chaque côté du guidon lorsqu'il ne faut pas changer de direction. Cette mise en œuvre permet d'informer positivement le cycliste qu'il faut aller tout droit, ce qui se distingue d'un appareil où on n'allume des zones lumineuses que lorsqu'il faut tourner. En effet, dans ce dernier cas, l'usager doit déduire de l'absence de lumière qu'il faut aller tout droit. Alors que dans le cas selon cette mise en œuvre de l'invention, on illumine les deux zones proximales et/ou les deux zones distales, si bien que le cycliste sait tout de suite qu'il ne faut pas tourner.

D'après l'invention, le procédé comprend, à l'approche d'une sortie d'un rond point que le cycliste doit emprunter parmi une pluralité de sorties du rond point, une étape consistant à illuminer un nombre de points lumineux distincts et intégrés sur le guidon, le nombre de points lumineux distincts étant indicatif du numéro de la sortie à emprunter. En d'autres termes, le procédé de guidage prend en compte le numéro de la sortie à emprunter (qui correspond au nombre de sorties à dépasser sans sortir sur la route à suivre, augmenté d'une unité), pour illuminer une quantité correspondante de points lumineux. Par exemple si le cycliste doit sortir à la première sortie rencontrée, le procédé n'allume qu'un seul point lumineux., par exemple si le cycliste doit sortir à la troisième sortie (c'est-à-dire qu'il en dépasse deux sur le rond point avant de sortir), alors le procédé illumine trois points lumineux. Il y a donc une étape consistant à identifier sur la route à suivre un rond point à emprunter, à compter le nombre de sorties à ne pas suivre, et afficher un nombre de points lumineux qui est le nombre de sorties à ne pas suivre, augmenté d'une unité.

En conséquence, l'invention concerne un procédé de guidage d'un cycliste pilotant un vélo équipé d'un guidon de vélo, comprenant à l'approche d'une sortie d'un rond point que le cycliste doit emprunter parmi une pluralité de sorties du rond point, une étape consistant à illuminer un nombre de points lumineux distincts et intégrés sur le guidon, le nombre de points lumineux distincts étant indicatif du numéro de la sortie à emprunter.

Avantageusement, le nombre de points lumineux illuminés décroit d'une unité à chaque fois qu'une sortie du rond point ne devant pas être empruntée est dépassée.

Avantageusement, au moins une zone lumineuse distale et/ou proximale est illuminée lorsque le cycliste doit tourner à une intersection du côté de la zone lumineuse distale et/ou proximale en question.

Avantageusement, au moins la zone distale et/ou la zone proximale situées du côté opposé au côté auquel le cycliste doit tourner sont éteintes. Selon les deux mises en ouvres ci-dessus, on décale le centre de gravité lumineux du côté où on doit tourner, ce qui est très intuitif pour le cycliste. En d'autres termes, il y a un déséquilibre lumineux, en faveur du côté où il faut se diriger.

Dans un mode préféré, il est prévu d'illuminer toutes les zones lumineuses du côté où on doit tourner, et il est prévu d'éteindre toutes les zones lumineuses du côté opposé. En alternative, on peut illuminer d'une première couleur (telle que du vert) le côté où il faut tourner, et illuminer d'une deuxième couleur (telle que du rouge) le côté où il ne faut pas tourner.

Avantageusement, si le cycliste doit faire demi tour, le procédé comprend :
- une étape consistant à illuminer simultanément les deux zones distales, puis,
- une étape consistant à illuminer simultanément les deux zones proximales,
- une étape consistant à éteindre toutes les zones lumineuses.

Autrement dit, le procédé affiche deux chenillards de chaque côté de la potence, qui se dirigent en même temps vers l'intérieur du guidon (vers la potence), pour inviter à faire demi tour.

Avantageusement, au moins la zone lumineuse distale est illuminée de manière clignotante lorsque le cycliste doit tourner du côté de la zone lumineuse distale en question. Il y a donc une séquence d'illumination spécifique à l'approche d'une intersection, ou une fois arrivé à l'intersection elle-même. On peut par exemple commencer à illuminer de manière continue à 50m de l'intersection en question, et effectuer un clignotement lorsqu'il faut effectivement tourner.

Avantageusement, le procédé de guidage comprend une étape initiale d'appairage entre le guidon de vélo et un appareil électronique portable de navigation. Le guidon est donc un relais de l'appareil électronique portable, tel qu'un téléphone portable, autrement appelé smartphone. Les calculs de navigation et/ou cartes sont donc gérés par le téléphone, et ce dernier envoie simplement au guidon les instructions de commande pour illuminer les zones lumineuses en fonction de la route à suivre.

Avantageusement, le procédé de guidage comprend une étape consistant à illuminer un témoin lumineux et/ou les sources de lumières avec une séquence ou une couleur particulière lorsque l'appareil électronique portable reçoit une notification ou un message ou un appel destiné au cycliste.

D'après l'invention, le procédé de guidage est mis en œuvre par une unité de géolocalisation et/ou une unité de calcul embarquées sur le guidon.

Un deuxième aspect de l'invention revendiquée concerne un guidon de vélo, comprenant une pluralité de sources de lumière agencées de part et d'autre d'une zone de fixation centrale du guidon de vélo sur une potence de vélo, et agencées pour indiquer une route à suivre à un utilisateur, caractérisé en ce que le guidon de vélo comprend de chaque côté de la zone de fixation centrale des sources de lumière agencées pour former une première zone lumineuse, telle qu'une zone lumineuse proximale située du côté de la zone de fixation centrale du guidon de vélo et une deuxième zone lumineuse, telle qu'une zone lumineuse distale, agencées pour être illuminées distinctement en fonction de la route à suivre. Le guidon de vélo selon la présente mise en œuvre permet donc de créer des combinaisons d'illumination entre chacune des zones lumineuses proximale et/ou distale de chaque côté de la potence, ce qui augmente les possibilités de guidage.

D'après l'invention, les sources de lumière sont intégrées au guidon. Ainsi, les sources de lumières forment les zones lumineuses et les points lumineux. Les mêmes sources de lumière peuvent servir à former les zones lumineuse (allumage de toutes les sources de lumière) et les points lumineux (allumage d'un nombre partiel de sources de lumière, par exemple une sur deux ou une sur trois).

Autrement dit, les mêmes sources de lumière peuvent être utilisées pour informer le cycliste lors du passage d'une intersection et lors du passage d'un rond point, c'est alors la gestion qui sera différente. Dans le premier cas, on illumine les zones proximales ou distales, et dans le deuxième cas, on forme des points lumineux distincts sur une seule zone lumineuse, pour indiquer le numéro de sortie.

Avantageusement, les sources de lumière sont agencées pour former des zones lumineuses pour guider le cycliste à une intersection, et des points lumineux pour guider le cycliste lorsqu'il aborde ou traverse un rond point,
Alternativement, dans un mode de réalisation particulier, les zones lumineuses sont séparées des points lumineux. Cela permet d'éviter toute confusion, en séparant la position et la localisation des zones lumineuses et des points lumineux sur le guidon. Cependant, les sources de lumière formant les zones lumineuses et les points lumineux sont intégrées au guidon, c'est-à-dire fixées à demeure sur le guidon, pour éviter toute chute.

Avantageusement, le guidon de vélo comprend au moins une batterie amovible et au moins une batterie auxiliaire agencée pour alimenter les sources de lumière si ladite batterie amovible est retirée du guidon. La batterie amovible peut être la source principale d'énergie, et la batterie auxiliaire peut être prévue pour apporter une alimentation au moins lors d'un changement de batterie amovible.

Avantageusement, ladite au moins une batterie auxiliaire est également amovible.

Avantageusement, le guidon de vélo comprend une interface de connexion au moins à une de ses extrémités, et la batterie amovible est agencée pour se monter sur ladite interface de connexion. On peut envisager un montage par clipsage, ou par une interface de type baïonnette. On peut aussi prévoir une fixation interne au tube avec une mâchoire ou une olive écartée et plaquée par une vis sur le diamètre interne du tube du guidon.

Avantageusement, le guidon de vélo comprend des moyens de communication sans fil. On peut envisager par exemple une puce de communication conforme au standard Bluetooth.

Avantageusement, le guidon de vélo comprend au moins un phare.

Avantageusement, les sources de lumière sont agencées pour émettre des lumières de différentes couleurs, en fonction de la route à suivre, et/ou d'événement lié à la navigation, tel que l'approche d'une zone dangereuse, une zone limitée à une vitesse particulière par exemple.

Avantageusement, le guidon peut comprendre une source de lumière de couleur (une led bleue) pour relayer ou informer d'une notification du téléphone.

Avantageusement, les sources de lumière sont des diodes électroluminescentes, recouvertes par une paroi translucide pour former chacune des zones lumineuses.

Avantageusement, les sources de lumière sont logées dans des trous ménagés dans un tube formant la structure du guidon de vélo. Ainsi il n'y a pas de protubérance.

Avantageusement, la paroi translucide est clipsée, ou encore collée et/ou vissée sur le tube formant la structure du guidon de vélo. Elle est donc fixée de manière inamovible.

Un troisième aspect de l'invention concerne un vélo comprenant un guidon de vélo selon le deuxième aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue d'un guidon de vélo selon l'invention ;
- la figure 2 représente un exemple de navigation le long d'une route à suivre, avec une représentation schématique du guidon de la figure 1 vu de dessus, aux intersections de la route suivie.

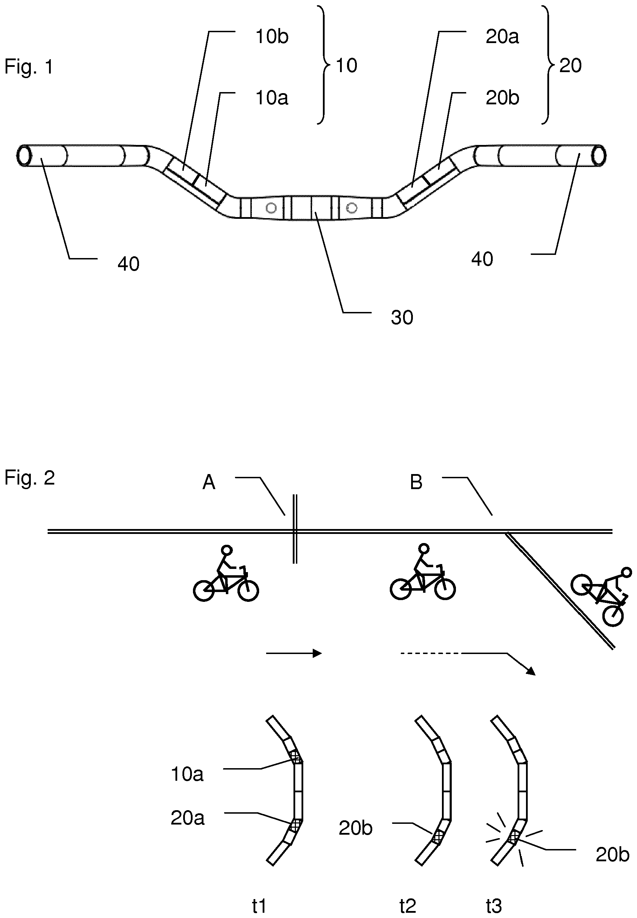

La figure 1 représente un guidon de vélo selon l'invention, avec une zone de fixation centrale 30 agencée pour être fixée à une potence de vélo par exemple.

Le guidon de vélo comprend également deux surfaces lumineuses 10 et 20 chacune agencée d'un côté de la zone de fixation centrale 30. La surface lumineuse 10 est à gauche de la zone de fixation centrale, et la surface lumineuse 20 est à sa droite.

Chaque surface lumineuse 10 et 20 comprend par exemple un cache en matière translucide et au moins deux diodes électroluminescentes sous le cache de matière translucide, de sorte à pouvoir illuminer de manière indépendante respectivement sur chaque zone lumineuse 10 et 20 une extrémité proximale, et une extrémité distale. En d'autres termes, les extrémités proximales forment des zones lumineuses proximales 10a et 20a proches du centre ou du milieu du guidon, et les extrémités distales forment des zones lumineuses distales 10b et 20b proches de l'extérieur du guidon.

Les diodes électroluminescentes non visibles sur la figure 1 peuvent être logées dans des trous du guidon, et fixées à l'aide d'une résine, ou encore y être maintenues par des supports clipsés (emboîtés élastiquement), ou collés et/ou vissés sur le guidon. On peut aussi envisager de monter les diodes électroluminescentes sur un circuit imprimé ou une carte électronique elle-même embarquée ou insérée dans le guidon.

En particulier, on peut intégrer les sources de lumières (les diodes) dans un support plastique transparent qui est collé-vissé sur le guidon.

On voit donc que les sources lumineuses et les zones lumineuses ainsi formées sont directement intégrées au guidon et n'en sont pas détachables. Cela permet de garantir une absence de détachement ou décrochage.

Le guidon de vélo comprend de plus une unité de commande électronique agencée pour commander les diodes électroluminescentes, et des moyens de communication sans fil, une puce de communication au standard Bluetooth par exemple, connectée à l'unité de commande et agencée pour établir une connexion sans fil avec un appareil électronique portable tel qu'un téléphone par exemple.

Le guidon de vélo comprend également deux batteries amovibles 40 qui sont fixées de manière amovible aux extrémités du guidon de vélo, de sorte à pouvoir fournir de l'énergie électrique à une batterie auxiliaire montée à demeure sur le guidon de vélo (non visible sur la figure 1), et également aux autres composants électriques ou électroniques, tels que l'unité de commande, les moyens de communication sans fil, ou d'autres organes tel qu'un ou plusieurs phares, un avertisseur sonore...

De manière préférée, on peut envisager d'insérer les batteries amovibles dans le tube du guidon pour les protéger au maximum, et leur retrait ne raccourcit pas la longueur utile du guidon.

Les batteries amovibles 40 peuvent se fixer au guidon de vélo par rotation ¼ de tour avec par exemple une baïonnette, ou par clipsage (emboîtement élastique), ou encore par vissage, afin d'établir un contact électrique avec une interface de connexion reliée au circuit électrique du guidon de vélo.

Le guidon de vélo peut donc établir une connexion (sans fil) avec un téléphone portable par exemple, qui est doté de moyens de navigation et/ou localisation (un système global de navigation (GNSS), tel que GPS, GLONASS ou encore Galileo), et de moyens de navigation pour calculer une route à suivre. Avec un programme spécifique, il est alors possible de commander depuis le téléphone les diodes électroluminescentes du guidon de vélo pour illuminer les zones lumineuses afin d'indiquer la route à suivre au cycliste. L'avantage de la connexion sans fil est que l'appareil électronique maître peut rester dans une poche du cycliste, à l'abri des intempéries, tout en commandant le guidon esclave.

En particulier, il est possible d'envoyer à l'unité de commande via les moyens de communication une ou plusieurs séquences d'illumination. Par exemple, à une intersection A de la figure 2 où il faut aller tout droit, les deux zones lumineuses proximales 10a et 20a sont simultanément illuminées à un instant t1. En conséquence, le cycliste comprend en voyant illuminées ou allumées les deux parties les plus proches de la potence du vélo qu'il ne faut pas tourner à cette intersection A.

Par contre, à l'intersection B, le cycliste doit tourner à droite. Toutes les zones lumineuses du côté gauche sont éteintes à l'instant t2, et au moins l'une des zones lumineuses proximale 20a et zones lumineuses distale 20b est illuminée, pour prévenir le cycliste de l'imminence d'un changement de direction, par exemple 50m avant d'arriver à l'intersection B. On peut également illuminer la zone lumineuse proximale 20a.

À l'instant t3, c'est-à-dire quand le cycliste arrive au niveau de l'intersection B, au moins la zone lumineuse distale 20b est illuminée de manière clignotante, pour indiquer que c'est le moment de changer de direction et qu'il faut tourner à droite. On peut également illuminer de manière clignotante la zone lumineuse proximale 20a.

On peut prévoir au surplus de rendre les zones lumineuses proximales 10a et 20a seulement visibles par le cycliste, et les zones lumineuses distales 10b et 20b visibles par le cycliste, mais également par un usager de la route faisant face au cycliste (un conducteur de voiture venant en sens inverse par exemple) pour avertir ce dernier de l'intention de tourner du cycliste.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à deux surfaces lumineuses 10 et 20, mais on peut envisager plus de zones lumineuses. De plus, il est fait référence à une connexion sans fil entre l'appareil électronique portable et le guidon de vélo, mais on peut envisager une connexion filaire, dans le cas où l'appareil électronique serait directement fixé et connecté au guidon.

## Revendications

1. Procédé de guidage d'un cycliste pilotant un vélo équipé d'un guidon de vélo, comprenant :
- les étapes consistant à illuminer distinctement de chaque côté d'une zone de fixation centrale (30) du guidon de vélo fixé sur une potence de vélo une zone lumineuse proximale (10a, 20a) intégrée au guidon et située du côté de la zone de fixation centrale (30) ou une zone lumineuse distale (10b, 20b) intégrée au guidon, en fonction de la route à suivre ;
- à l'approche d'une sortie d'un rond point que le cycliste doit emprunter parmi une pluralité de sorties du rond point, une étape consistant à illuminer un nombre de points lumineux distincts et intégrés sur le guidon, le nombre de points lumineux distincts étant indicatif du numéro de la sortie à emprunter

2. Procédé de guidage selon la revendication précédente, dans lequel au moins chacune des zones lumineuses proximales (10a, 20a) et/ou chacune des zones lumineuses distales (10b, 20b) est illuminée lorsque le cycliste doit aller tout droit à une intersection.

3. Procédé de guidage selon l'une des revendications précédentes , dans lequel le nombre de points lumineux illuminés décroit d'une unité à chaque fois qu'une sortie du rond point ne devant pas être empruntée est dépassée.

4. Procédé de guidage selon l'une des revendications précédentes, dans lequel au moins une zone lumineuse distale (10b, 20b) et/ou proximale (10a, 20a) est illuminée lorsque le cycliste doit tourner à une intersection du côté de la zone lumineuse distale (10b, 20b) et/ou proximale (10a, 20a) en question, et dans lequel au moins la zone distale (20b, 10b) et/ou la zone proximale (20a, 10a) situées du côté opposé au côté auquel le cycliste doit tourner sont éteintes.

5. Procédé de guidage selon l'une des revendications précédentes, dans lequel au moins la zone lumineuse distale (10b, 20b) est illuminée de manière clignotante lorsque le cycliste doit tourner du côté de la zone lumineuse distale (10b, 20b) en question.

6. Procédé de guidage selon l'une des revendications précédentes, dans lequel si le cycliste doit faire demi tour, le procédé comprend :
- une étape consistant à illuminer simultanément les deux zones distales, puis,
- une étape consistant à illuminer simultanément les deux zones proximales,
- une étape consistant à éteindre toutes les zones lumineuses.

7. Guidon de vélo, comprenant une pluralité de sources de lumière agencées et intégrées au guidon de part et d'autre d'une zone de fixation centrale (30) du guidon de vélo sur une potence de vélo, et agencées pour indiquer une route à suivre à un utilisateur, et en ce que le guidon de vélo comprend de chaque côté de la zone de fixation centrale (30) des sources de lumière intégrées et agencées pour former au moins une première zone lumineuse, telle qu'une zone lumineuse proximale (10a, 20a) située du côté de la zone de fixation centrale (30) du guidon de vélo et au moins une deuxième zone lumineuse, telle qu'une zone lumineuse distale (10b, 20b), agencées pour être illuminées distinctement en fonction de la route à suivre, **caractérisé en ce qu'**il embarque une unité de géolocalisation et/ou une unité de calcul mettant en œuvre le procédé de guidage selon l'une quelconque des revendications 1 à 6.

8. Guidon de vélo selon la revendication précédente, comprenant au moins une batterie amovible (40) et au moins une batterie auxiliaire agencée pour alimenter les sources de lumière si ladite batterie amovible est retirée du guidon.

9. Guidon de vélo selon l'une des revendications 7 ou 8, comprenant des moyens de communication sans fil.

10. Guidon de vélo selon l'une des revendications 7 à 9, dans lequel les sources de lumière sont des diodes électroluminescentes, recouvertes par une paroi translucide pour former chacune des zones lumineuses.

11. Vélo comprenant un guidon de vélo selon l'une des revendications 7 à 10.

## Patentansprüche

1. Verfahren zum Leiten eines Radfahrers, der ein Fahrrad steuert, das mit einem Fahrradlenker ausgestattet ist, umfassend:
- die Schritte, die darin bestehen, abhängig von dem Weg, dem gefolgt werden soll, auf jeder Seite eines zentralen Befestigungsbereichs (30) des Fahrradlenkers, der an einem Fahrradvorbau befestigt ist, getrennt einen proximalen Leuchtbereich (10a, 20a), der in den Lenker integriert ist und auf der Seite des zentralen Befestigungsbereichs (30) liegt, oder einen distalen Leuchtbereich (10b, 20b), der in den Lenker integriert ist, zu erleuchten;
- beim Annähern einer Ausfahrt aus einem Kreisverkehr, die der Radfahrer unter einer Vielzahl von Ausfahrten des Kreisverkehrs nehmen soll, einen Schritt, der darin besteht, eine Anzahl getrennter und integrierter Leuchtpunkte am Lenker zu erleuchten, wobei die Anzahl getrennter Leuchtpunkte die Nummer der Ausfahrt anzeigt, die genommen werden soll.

2. Leitverfahren nach dem vorstehenden Anspruch, wobei mindestens jeder der proximalen Leuchtbereiche (10a, 20a) und/oder jeder der distalen Leuchtbereiche (10b, 20b) erleuchtet wird, wenn der Radfahrer an einer Kreuzung geradeaus fahren soll.

3. Leitverfahren nach einem der vorstehenden Ansprüche, wobei die Anzahl erleuchteter Leuchtpunkten jedesmal um eine Einheit abnimmt, wenn eine Ausfahrt des Kreisverkehrs, die nicht genommen werden soll, zurückgelassen wird.

4. Leitverfahren nach einem der vorstehenden Ansprüche, wobei mindestens ein distaler (10b, 20b) und/oder proximaler Leuchtbereich (10a, 20a) erleuchtet wird, wenn der Radfahrer an einer Kreuzung zu der Seite des betreffenden distalen (10b, 20b) und/oder proximalen Leuchtbereichs (10a, 20a) abbiegen soll, und wobei mindestens der distale Bereich (20b, 10b) und/oder der proximale Bereich (20a, 10a), die auf der gegenüberliegenden Seite der Seite, zu der der Radfahrer abbiegen soll, liegen, erloschen sind.

5. Leitverfahren nach einem der vorstehenden Ansprüche, wobei mindestens der distale Leuchtbereich (10b, 20b) blinkend erleuchtet wird, wenn der Radfahrer zu der Seite des betreffenden distalen Leuchtbereichs (10b, 20b) abbiegen soll.

6. Leitverfahren nach einem der vorstehenden Ansprüche, wobei das Verfahren, wenn der Radfahrer wenden soll, umfasst:
- einen Schritt, der darin besteht, die zwei distalen Bereiche gleichzeitig zu erleuchten, anschließend
- einen Schritt, der darin besteht, die zwei proximalen Bereiche gleichzeitig zu erleuchten,
- einen Schritt, der darin besteht, alle die Leuchtzonen zu erlöschen.

7. Fahrradlenker, der eine Vielzahl von Lichtquellen umfasst, die beidseits eines zentralen Befestigungsbereichs (30) des Fahrradlenkers an einem Fahrradvorbau im Lenker eingerichtet und integriert sind und so eingerichtet sind, dass sie einem Benutzer einen Weg anzeigen, dem gefolgt werden soll, und
dadurch, dass der Fahrradlenker auf jeder Seite des zentralen Befestigungsbereichs (30) Lichtquellen umfasst, die so integriert und eingerichtet sind, dass sie mindestens einen ersten Leuchtbereich, wie etwa einen proximalen Leuchtbereich (10a, 20a), der auf der Seite des zentralen Befestigungsbereichs (30) des Fahrradlenkers liegt, und mindestens einen zweiten Leuchtbereich, wie etwa einen distalen Leuchtbereich (10b, 20b) bilden, die so eingerichtet sind, dass sie abhängig von dem Weg, dem gefolgt werden soll, getrennt erleuchtet werden,
**dadurch gekennzeichnet, dass** er eine Geolokalisierungseinheit und/oder eine Recheneinheit beinhaltet, die das Leitverfahren nach einem der Ansprüche 1 bis 6 implementiert.

8. Fahrradlenker nach dem vorstehenden Anspruch, der mindestens eine herausnehmbare Batterie (40) und mindestens eine Hilfsbatterie umfasst, die so eingerichtet ist, dass sie die Lichtquellen versorgt, wenn die herausnehmbare Batterie aus dem Lenker entfernt wird.

9. Fahrradlenker nach einem der Ansprüche 7 oder 8, der drahtlose Kommunikationsmittel umfasst.

10. Fahrradlenker nach einem der Ansprüche 7 bis 9, wobei die Lichtquellen Leuchtdioden sind, die von einer lichtdurchlässigen Wand bedeckt sind, um jeden der Leuchtbereiche zu bilden.

11. Fahrrad, das einen Fahrradlenker nach einem der Ansprüche 7 bis 10 umfasst.

## Claims

1. A method for guiding a cyclist riding a bicycle equipped with a bicycle handlebar, comprising:
- the steps of distinctly illuminating on each side of a central fastening area (30) of the bicycle handlebar fastened on a bicycle stem a proximal luminous area (10a, 20a) integrated into the handlebar and located on the side of the central fastening area (30) or a distal luminous area (10b, 20b) integrated into the handlebar, depending on the route to be followed;
- when approaching an exit of a roundabout that the cyclist must take among a plurality of exits of the roundabout, a step of illuminating a number of luminous points which are distinct and integrated on the handlebar, the number of distinct luminous points being indicative of the number of the exit to be taken.

2. The guiding method according to the preceding claim, wherein at least each of the proximal luminous areas (10a, 20a) and/or each of the distal luminous areas (10b, 20b) is illuminated when the cyclist must go straight at an intersection.

3. The guiding method according to one of the preceding claims, wherein the number of illuminated luminous points decreases by one each time an exit of the roundabout which is not to be taken is passed.

4. The guiding method according to one of the preceding claims, wherein at least one distal (10b, 20b) and/or proximal (10a, 20a) luminous area is illuminated when the cyclist must turn at an intersection on the side of the distal (10b, 20b) and/or proximal (10a, 20a) luminous area in question, and wherein at least the distal area (20b, 10b) and/or the proximal area (20a, 30 10a) located on the side opposite to the side to which the cyclist must turn are turned off.

5. The guiding method according to one of the preceding claims, wherein at least the distal luminous area (10b, 20b) is illuminated in a flashing manner when the cyclist has to turn to the side of the distal luminous area (10b, 20b) in question.

6. The guiding method according to one of the preceding claims, wherein if the cyclist has to turn around, the method comprises:
- a step of simultaneously illuminating both distal areas, then,
- a step of simultaneously illuminating both proximal areas,
- a step of turning off all the luminous areas.

7. A bicycle handlebar, comprising a plurality of light sources arranged and integrated into the handlebar on both sides of a central area (30) for fastening the bicycle handlebar on a bicycle stem, and arranged to indicate a route to be followed to a user, and
in that the bicycle handlebar comprises on each side of the central fastening area (30) light sources which are integrated and arranged to form at least one first luminous area, such as a proximal luminous area (10a, 20a) located on the side of the central fastening area (30) of the bicycle handlebar and at least one second luminous area, such as a distal luminous area (10b, 20b), arranged to be distinctly illuminated according to the route to be followed, **characterised in that** it embeds a geolocation unit and/or a calculation unit implementing the guiding method according to any one of claims 1 to 6.

8. The bicycle handlebar according to the preceding claim, comprising at least one removable battery (40) and at least one auxiliary battery arranged to power the light sources if said removable battery is removed from the handlebar.

9. The bicycle handlebar according to one of claims 7 or 8, comprising wireless communication means.

10. The bicycle handlebar according to one of claims 7 to 9, wherein the light sources are light emitting diodes, covered by a translucent wall to form each of the luminous areas.

11. A bicycle comprising a bicycle handlebar according to one of claims 7 to 10.
